Europäisches Patentamt

European Patent Office

Office européen des brevets

(11) Veröffentlichungsnummer: **0 103 835**

A2

(12) # EUROPÄISCHE PATENTANMELDUNG

(21) Anmeldenummer: 83109004.8

(22) Anmeldetag: 12.09.83

(51) Int. Cl.³: **G 02 B 5/16**
G 01 F 23/28, G 01 K 11/18
G 01 R 15/07, G 01 B 11/00
G 01 T 1/02, G 01 N 21/41
G 01 L 1/24

(30) Priorität: 21.09.82 DE 3234900

(43) Veröffentlichungstag der Anmeldung:
28.03.84 Patentblatt 84/13

(84) Benannte Vertragsstaaten:
CH DE FR GB LI

(71) Anmelder: SIEMENS AKTIENGESELLSCHAFT
Berlin und München Wittelsbacherplatz 2
D-8000 München 2(DE)

(72) Erfinder: Auracher, Franz, Dr.
Eichenstrasse 26
D-8021 Baierbrunn(DE)

(54) **Faseroptischer Sensor.**

(57) Es wird ein faseroptischer Sensor mit einer von der Meßgröße beeinflußten Meßfaser und mit einer von der Meßgröße unbeeinflußten Referenzfaser beschrieben, bei dem die Meßfaser und die Referenzfaser aus einem einzigen Glasfaser-Lichtwellenleiter besteht, die einen lichtführenden Querschnitt (1) und einen dazu konzenrischen weiteren lichtführenden Querschnitt (3) aufweist. Der äußere lichtführende Querschnitt (3) entspricht der Meßfaser, während der innere lichtführende Querschnitt (1) der Referenzfaser entspricht.

FIG 1

SIEMENS AKTIENGESELLSCHAFT

Berlin und München

Unser Zeichen
VPA 82 P 1799 E

## Faseroptischer Sensor

Die vorliegende Erfindung betrifft einen faseroptischen Sensor nach dem Oberbegriff des Patentanspruchs 1.

Faseroptische Sensoren sind von großer technischer Bedeutung, da sie alle Vorteile der Lichtleitfasern gegenüber elektrischen Übertragungsleitungen wie Unempfindlichkeit gegenüber elektromagnetischer Störungen, Potentialunterschiede, Kurzschlußfestigkeit, usw. aufweisen. Als Sensor dient dabei häufig die Faser selbst, deren Übertragungseigenschaften, beispielsweise die Dämpfung, durch die Meßgröße verändert wird. Um den Einfluß von Schwankungen der Lichtleistung am Fasereingang zu minimieren bzw. unerwünschte Einflüsse anderer Parameter, beispielsweise der Temperatur, auszuschalten, muß im allgemeinen zusätzlich eine Referenzfaser verwendet werden, die nicht von der Meßgröße beeinflußt wird. Im Idealfall sollen die Referenzfaser und die Meßfaser eng benachbart oder identisch sein, um z.B. den unerwünschten Einfluß von Temperaturgradienten auszuschalten.

Aufgabe der Erfindung ist es aufzuzeigen, wie eine engste Nachbarschaft zwischen der Referenzfaser und der Meßfaser erreicht werden kann.

Diese Aufgabe wird durch die im kennzeichnenden Teil des Patentanspruchs 1 angegebenen Merkmale gelöst.

Ed 1 Sti/18.8.1982

Bei dieser Lösung wird der innere strahlungsführende Bereich für die Referenz verwendet, während der umgebende äußere strahlungsführende Bereich durch die Meßgröße beeinflußt wird.

Mit einer solchen Faser mit konzentrischen strahlungsführenden Bereichen lassen sich beispielsweise unmittelbar Sensoren zur Messung von Temperatur, Füllstand oder Schichtdicken in Aufdampf- oder Sputteranlagen und mittelbar für fast alle anderen wichtigen Meßgrößen, wie beispielsweise Druck, Dehnung, Spannung, Strom usw. herstellen.

Spezielle erfindungsgemäße Sensoren gehen aus den Ansprüchen 2 bis 12 hervor.

Als Faser mit konzentrischen strahlungsführenden Bereichen eignet sich insbesondere ein Glasfaser-Lichtwellenleiter mit einem lichtführenden Querschnitt, der die im kennzeichnenden Teil des Anspruchs 13 angegebenen Merkmale aufweist.

Ein Detektor zum getrennten Messen von Strahlung aus einer erfindungsgemäßen Faser mit konzentrischen strahlungsführenden Bereichen geht aus dem Anspruch 13 hervor.

VPA 82 P 1799 E

Die Erfindung wird beispielhaft anhand der Figuren in
der folgenden Beschreibung näher erläutert. Von den
Figuren zeigen:

Figur 1 die Ansicht eines Querschnitts durch einen
erfindungsgemäßen Glasfaser-Lichtwellenleiter
mit konzentrischen lichtführenden Querschnitten
und darunter das radiale Brechzahlprofil dieser
Faser,

Figur 2 in schematischer Darstellung eine einfache
Sensoranordnung zur Anzeige des Flüssigkeitsstandes, und

Figur 3 einen erfindungsgemäßen lichtempfindlichen
Detektor mit konzentrischen lichtempfindlichen
Detektorflächen.

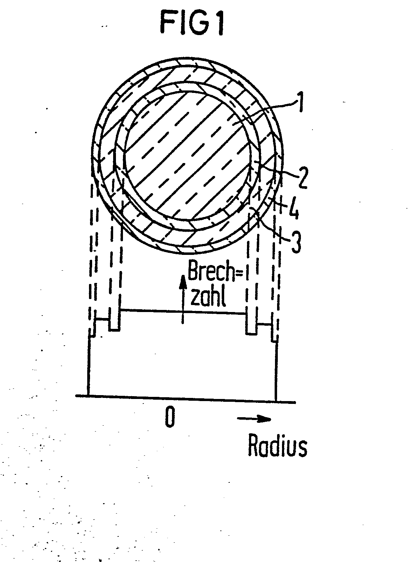

Die in Figur 1 dargestellte Glasfaser weist als inneren
lichtführenden Bereich einen Glaskern 1 auf, der von
einem Glasmantel 2 umgeben ist, der einen niedrigeren
Brechungsindex aufweist, als der Kern. Der Mantel 2 ist
von einem zweiten Glasmantel 3 umgeben, der im Vergleich
zum ersten Glasmantel einen höheren Brechungsindex
aufweist. Schließlich ist der zweite Mantel 3 von einem
sehr dünnen dritten Mantel 4 aus einem Material umgeben,
das im Vergleich zum zweiten Mantel 3 einen niedrigeren
Brechungsindex aufweist. Der zweite Mantel 3 bildet den
zweiten lichtführenden Querschnitt der Faser.

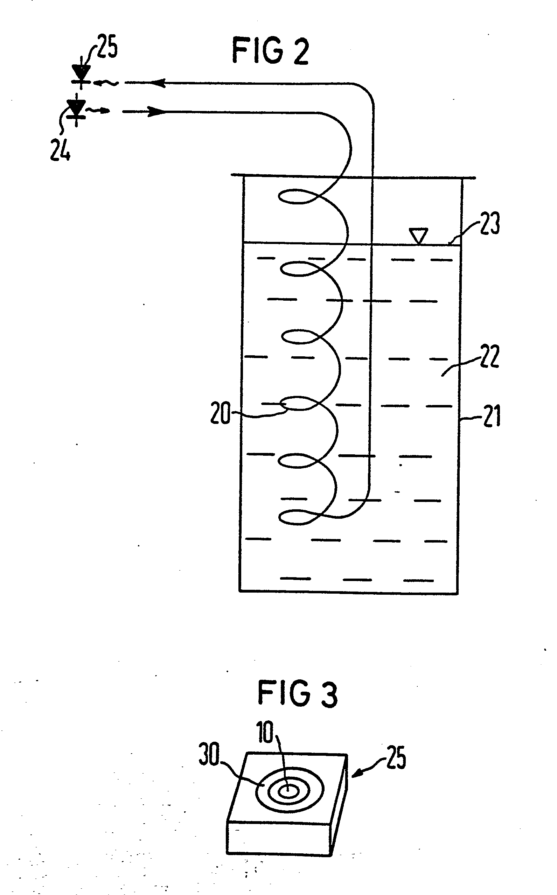

In der in Figur 2 dargestellten Sensoranordnung zur
Anzeige eines Flüssigkeitsstandes ist eine Faser nach
Figur 1 als Sensorelement verwendet und mit 20
bezeichnet. Die Faser 20 ist in eine in einem Behälter
21 befindliche Flüssigkeit 22 eingetaucht, deren Stand
23 gemessen werden soll.

Der dritte Mantel 4 der Faser 20 ist zumindest im Bereich des Behälters 21 sehr dünn, so daß bei Berührung mit der Flüssigkeit Licht aus dem lichtführenden Bereich 3 leckt. Das Licht wird durch einen Sender 24, beispielsweise eine lichtemittierende Diode gleichzeitig in die beiden lichtführenden Querschnitte 1 und 3 der Faser 20 an einem ihrer Enden eingekoppelt.

Am anderen Ende der Fase 20 ist ein Detektor 25 mit zwei konzentrischen lichtempfindlichen Flächen mit Elektrodenanschlüssen angeordnet, von denen die innere, kreisförmige Detektorfläche Licht aus dem inneren lichtführenden Querschnitt 1 und die umgebende äußere Licht aus dem umgebenden zweiten lichtführenden Bereich der Faser 20 empfängt.

Die Figur 3 zeigt den Detektor 25 in vergrößerter Darstellung. Die innere kreisförmige Detektorfläche ist mit 10 und die umgebende Detektorfläche mit 30 bezeichnet. Danach entspricht die Form der Detektorflächen genau der Form der lichtführenden Bereiche.

Verwendet man eine Flüssigkeit mit einem hohen Temperaturkoeffizienten des Brechungsindex, so kann man bei konstanter Eintauchtiefe die Temperatur der Flüssigkeit aus der Dämpfung des äußeren lichtführenden Bereichs 3 ermitteln. Anstelle der Flüssigkeit kann man die Faser 20 auch mit einem Kunststoff überziehen, dessen Brechungsindex stark von der Temperatur abhängt. Ebenso kann die Faser mit einem Flüssigkristall umgeben werden, dessen Brechungsindex durch Anlegen einer zu messenden elektrischen Spannung an geeignete Elektroden verändert wird. Man erhält somit einen Sensor für elektrische Spannungen.

Besonders interessant ist ein Fasersensor auch zur Messung von Schichtdicken in Sputtersystemen, in denen wegen der auftretenden hohen elektromagnetischen Feldstärken bzw. wegen der Feldverzerrungen durch die erforderliche Abschirmung Dickenmesser mit Schwingquarzen problematisch sein können. Verwendet man statt dessen einen vorgeschlagenen Fasersensor, so fallen diese Probleme weg. Als Maß für die Schichtdicke kann beispielsweise die Dämpfung dienen, die durch eine aufgedampfte Metallschicht im äußeren Lichtwellenleiter hervorgerufen wird.

Bei dielektrischen Schichten kann die Dämpfung aber u.U. auch die Veränderung des Akzeptanzwinkels des äußeren lichtführenden Bereiches 3 als Maß für die Schichtdicke verwendet werden.

Eine vorgeschlagene Faser kann auch als Dosimeter für ionisierende Strahlung dienen, wenn diese zwar in dem äußeren strahlungsführenden Bereich, nicht aber in den inneren eindringt.

Auch der Verschmutzungsgrad der eine vorgeschlagene Faser umgebenden Flüssigkeit, beispielsweise Spülwasser oder Kühlwasser, kann aufgrund der Faserdämpfung ermittelt werden. Verwendet man weißes Licht oder variiert man die Lichtwellenlänge, so kann man die spektrale Absorption der umgebenden Flüssigkeit bzw. der darin gelösten Stoffe messen.

Die Eigenschaften der vorgeschlagenen Faser können auf verschiedene Weise für die Anwendung als Sensor optimiert werden. Beispielsweise kann die numerische Apertur des inneren lichführenden Bereichs von der des äußeren stark unterschiedlich gewählt werden, bzw. der äußere Mantel sehr dünn ausgeführt oder ganz weggelassen werden. Ist beispielsweise die numerische Apertur des inneren lichtführenden Bereichs im Vergleich zum äußeren sehr klein, so steigt die Dämpfung des inneren lichtführenden Bereichs bei Verbiegen der Faser stark an. Derartige Fasern können mittelbar als Sensoren für viele Meßgrößen verwendet werden, wenn die Meßgröße in eine Verbiegung der Faser umgewandelt wird, beispielsweise über eine Membran zur Druckmessung oder über ein Bimetall zur Temperaturmessung usw..

13 Patentansprüche

3 Figuren

Patentansprüche

1. Faseroptischer Sensor mit einer von der Meßgröße beeinflußten Meßfaser und mit einer von der Meßgröße unbeeinflußten Referenzfaser, d a d u r c h g e k e n n z e i c h n e t , daß die Meßfaser und die Referenzfaser aus einer einzigen Faser besteht, die konzentrische strahlungsführende Bereiche (1, 3) aufweist.

2. Faseroptischer Sensor nach Anspruch 1 zur Messung eines Flüssigkeitsstandes, d a d u r c h g e k e n n z e i c h n e t , daß im Meßbereich der äußere der konzentrischen strahlungsführenden Bereiche (3) so nahe an der Faseroberfläche ist, daß bei Berührung mit der Flüssigkeit Strahlung aus dem äußeren strahlungsführenden Bereich (3) leckt.

3. Sensor nach Anspruch 1 zur Messung der Temperatur, d a d u r c h g e k e n n z e i c h n e t , daß im Meßbereich die Faser von einem Material mit einem so hohen Temperaturkoeffizienten des Brechungsindex umgeben ist, das die Dämpfung des äußeren strahlungsführenden Bereiches (3) beeinflußt wird.

4. Sensor nach Anspruch 1 zur Messung von elektrischen Spannungen, d a d u r c h g e k e n n z e i c h n e t, daß im Meßbereich die Faser von einem Flüssigkristallmaterial umgeben ist, dessen Brechungsindex durch Anlegen der zu messenden elektrischen Spannung an geeignete Elektroden verändert wird.

5. Sensor nach Anspruch 1 zur Messung von Schichtdicken in Bedampfungs- und Sputteranlagen, d a d u r c h g e k e n n z e i c h n e t , daß die Faser in der Anlage angeordnet ist, wobei die Schichtdicke über den Einfluß der auf die Faser aufgedampften oder -gesputterten Schicht auf den äußeren strahlungsführenden Bereich (3) der Faser zu messen ist.

6. Sensor nach Anspruch 1 zur Messung der Schichtdicke dielektrischer Schichten, d a d u r c h g e k e n n z e i c h n e t , daß die Faser an der dielektrischen Schicht angeordnet ist, wobei die Veränderung des Akzeptanzwinkels des äußeren strahlungsführenden Bereichs (3) zu messen ist.

7. Dosimeter aus einem Sensor nach Anspruch 1, d a d u r c h g e k e n n z e i c h n e t , daß die Faser so bemessen ist, daß die ionisierende Strahlung nur in den äußeren strahlungsführenden Bereich (3), nicht aber in den inneren strahlungsführenden Bereich (1) eindringt.

8. Sensor nach Anspruch 1 zur Messung des Verschmutzungsgrades einer Flüssigkeit, d a d u r c h g e k e n n z e i c h n e t , daß die Faser in der Flüssigkeit angeordnet ist, wobei die durch die spektrale Absorption der Flüssigkeit bzw. der darin gelösten Stoffe verursachte Dämpfung im äußeren strahlungsführenden Bereich (3) zu messen ist.

9. Sensor nach einem der vorhergehenden Ansprüche, d a d u r c h g e k e n n z e i c h n e t , daß die numerische Apertur des inneren strahlungsführenden Bereiches (1) von der des äußeren strahlungsführenden Bereich (3) stark unterschiedlich ist.

10. Sensor nach Anspruch 9 zur Messung einer Verbiegung oder einer die Verbiegung verursachenden Meßgröße, d a d u r c h g e k e n n z e i c h n e t , daß die Faser so angeordnet ist, daß sie die Verbiegung mitmacht, wobei die Dämpfung des einen strahlungsführenden Bereichs im Vergleich zum anderen zu messen ist.

11. Sensor nach Anspruch 10, insbesondere zum Messen des Druckes oder der Temperatur, d a d u r c h g e k e n n z e i c h n e t , daß die Faser auf einer Membran oder einem Bimorph befestigt ist.

12. Faser mit konzentrische strahlungsleitende Bereiche aufweisenden Bereichen, insbesondere nach einem der vorhergehenden Ansprüche, g e k e n n z e i c h n e t d u r c h einen Glasfaser-Lichtwellenleiter mit einem lichtführenden Querschnitt (1) und einem dazu konzentrischen weiteren lichtführenden Querschnitt (3).

13. Detektor zum getrennten Detektieren von Strahlung aus konzentrischen strahlungsführenden Bereichen einer Faser nach einem der vorhergehenden Ansprüche, d a d u r c h g e k e n n z e i c h n e t , daß der Detektor konzentrische strahlungsempfindliche Detektorflächen aufweist, die der Querschnittsform der konzentrischen strahlungsführenden Bereiche geformt sind.

0103835

1/2

FIG 1

Brech=
zahl

0

Radius

## FIG 2

## FIG 3